# EUROPEAN PATENT SPECIFICATION

(11) **EP 0 420 372 B1**
(45) Date of publication and mention of the grant of the patent: **27.04.1994**
(21) Application number: 90301275.5
(22) Date of filing: 07.02.1990
(51) Int. Cl.: D21F 3/02

(54) **Extended nip press belt**
Band für eine Presse mit verlängerter Presszone
Bande pour presse élargie

(30) Priority: 28.09.1989 US 413788
(43) Date of publication of application: 03.04.1991
(73) Proprietor: ALBANY INTERNATIONAL CORP., Albany, New York 12204 (US)
(72) Inventor: Dutt, William H., Rensselaer, New York 12144 (US)
(74) Representative: Lowther, Deborah Jane

(56) References cited:
- EP-A- 0 289 477
- EP-A- 0 336 876
- WO-A-87/02080
- US-A- 4 552 620
- US-A- 4 701 368

## Description

The present invention relates to mechanisms for extracting water from a web of material, and more particularly from a fibrous web being processed into a paper product on a papermaking machine. Specifically, the present invention relates to an impermeable belt designed for use in conjunction with an extended nip press on a papermaking machine.

During the papermaking process, a fibrous web is formed on a forming wire by depositing a fibrous slurry thereon. A large amount of water is drained from the slurry during this process, after which the newly formed web proceeds to a press section. The press section includes a series of press nips, in which the fibrous web is subjected to compressive forces designed to remove water therefrom. The web finally proceeds to a drying section which includes heated dryer drums around which the web is directed. The heated dryer drums reduce the water content of the web to a desirable level through evaporation.

Rising energy costs have made it increasingly desirable to remove as much water as possible from the web prior to its entering the dryer section. The dryer drums are often heated from within by steam and related costs can be substantial, especially when a large amount of water needs to be removed from the web.

Traditionally, press sections have included a series of nips formed by pairs of adjacent cylindrical press rollers. Recently, the use of extended press nips has been found to be advantageous over the use of nips formed by pairs of adjacent rollers. The longer the web can be subjected to pressure in the nip, the more water can be removed there, and, consequently, the less will remain to be removed through evaporation in the dryer section.

The present invention relates to extended nip presses of the shoe type. In this variety of extended nip press, the nip is formed between a cylindrical press roller and an arcuate pressure shoe. The latter has a cylindrically concave surface having a radius of curvature close to that of the cylindrical press roller. When roller and shoe are brought into close physical proximity, a nip is formed which can be five to ten times longer in the machine direction than one formed between two press rollers. This increases the so-called dwell time of the fibrous web in the extended nip while maintaining the same level of pressure per square metre pressing force used in a two-roller press. The result of this new extended nip technology has been a dramatic increase in dewatering of the fibrous web in the extended nip when compared to conventional nips on paper machines.

An extended nip press of the shoe type requires a special belt, such as that shown in Canadian Patent No. 1,188,556. This belt is designed to protect the press fabric supporting, carrying, and dewatering the fibrous web from the accelerated wear that would result from direct, sliding contact over the stationary pressure shoe. Such a belt must be made with a smooth impervious surface that rides, or slides, over the stationary shoe on a lubricating film of oil. The belt moves through the nip at roughly the same speed as the press fabric thereby subjecting the press fabric to minimal amounts of rubbing against stationary components.

The normal configuration for an extended nip press involves the use of two press fabrics. The components in the nip can be listed in the following sequence: a grooved cylindrical press roller, a first press fabric, the fibrous web or nascent paper sheet, a second press fabric, the special belt, the lubricating film, and the arcuate pressure shoe.

All of the extended nip presses currently in commercial operation are of the above configuration. However, this so-called double-felted extended nip press is limited to certain types of paper grades. To expand the application of the extended nip press to finer paper grades and newsprint, it will be necessary to develop a single-felted extended nip press.

In a single-felted extended nip press, the components in the nip would be listed in the following sequence: a smooth cylindrical press roller, the fibrous web or nascent paper sheet, the press fabric, the special belt, the lubricating film, and the arcuate pressure shoe.

In the double-felted extended nip press, the water pressed from the fibrous web can pass into either of the two press fabrics, as well as into the grooves provided in the cylindrical press roller. In the single-felted extended nip press, two of these sinks for water storage have been eliminated. There is only one felt and, because the fibrous web contacts the cylindrical press roller directly, this roller must have a smooth surface. Clearly, this loss of temporary water storage space must be replaced if a single-felted extended nip press is ever to achieve widespread use. It is absolutely mandatory that voids be provided in the nip of the press, so that water pressed from the paper sheet in a single-felted extended nip press will have a place to be stored.

Two approaches have been taken to achieve a satisfactory solution of this problem. Canadian Patent No. 1,190,779 shows an extended nip press belt having voids on the felt side. These voids arise from the weave pattern of the base fabric and the absence of impregnation on the felt side of the belt, and provide a place into which liquid can be transferred during passage of the fibrous web, press fabric, and special belt through the nip.

The other approach is represented by U.S. Patents Nos. 4,559,258 and 4,643,916 and US-A-4552 620. These show an extended nip press belt having grooves on the felt side to store water pressed from the fibrous web.

While these two approaches were directed primarily toward achieving a solution to the water-removal problem in a single-felted extended nip press, it has been found that use of either belt in a double-felted extended nip press leads to enhanced dewatering.

In practice, however, it has also been found that satisfactory grooved ENP belts cannot be produced for commercial use. All attempts to make this structure to date have resulted in a product which fails due to delamination of grooves, and/or collapse of the grooves. The present invention is a special belt for an extended nip press which is substantially less susceptible to delamination.

But for the problems noted above, the special extended nip press belts having grooves cut into a polyurethane-coated surface demonstrate good dewatering capabilities when used on extended nip presses. The present invention is a grooved extended nip press belt which is substantially less susceptible or not susceptible to groove delamination. As such, it can also be viewed as an improvement of the belt shown in Canadian Patent No. 1,190,779, which has exhibited problems in operation because of the difficulty experienced in dewatering the voids on the felt side thereof. The belt of the present invention, having a grooved surface, can be dewatered much more easily.

The present invention provides a belt for use in an extended nip press of the shoe type for dewatering a fibrous web, said belt comprising:
a base fabric in the form of an endless loop having an inner surface and an outer surface, said base fabric having machine direction yarns and cross-machine direction yarns, said machine-direction being around said loop and said cross-machine direction being across said loop; and,
a coating of a polymeric resin on said inner and outer surfaces of said base fabric, said coating impregnating and rendering said base fabric impervious to liquids, said coating being smooth and giving said belt a uniform thickness, said coating having a plurality of grooves cut thereinto on said outer surface of said base fabric, said plurality of grooves defining channels for water pressed from said fibrous web alternating with land areas, and,
characterised in that the said yarns in at least one of said machine and cross-machine directions are spun yarns, said spun yarns being spun from a plurality of staple fibres, and in that said land areas are anchored to said base fabric by said plurality of staple fibers of said spun yarns, so that said land areas are substantially less susceptible to delamination from said belt.

Accordingly, the present invention is a belt for use on an extended nip press on a papermachine for dewatering a fibrous web being processed into some form of paper product. The belt includes a base fabric having the form of an endless loop, having been woven in that form or closed thereto by means of a seam. The base fabric, having machine-direction yarns and cross-machine direction yarns, includes spun yarns in at least one of these directions. Where the base fabric has a multilayer structure, the spun yarns will at least be found on the outer surface of the endless loop of the base fabric. The spun yarns, in any case, are spun from a plurality of staple fibres.

The belt further includes a coating of a polymeric resin, such as, for example, polyurethane. The coating is applied in such a manner as to completely impregnate the structure of the base fabric rendering it impervious to liquids. It should further be smooth and of uniform thickness.

On the outer surface of the coated belt are cut a plurality of grooves, which can, for example, lie in the machine direction or cross-machine direction. The grooves define channels for water pressed from the fibrous web in the extended press nip, and are separated by what may be referred to as land areas. These areas are portions of the coating not cut away to create grooves.

In the prior-art extended nip press belts described above, the land areas delaminate, or peel off, from the base structure because a polymeric resin, such as polyurethane, does not have sufficient strength and adhesion capabilities to withstand the compressive operating conditions in the press nip. In the present invention, this is substantially overcome through the use of the spun yarns in the base fabric on the belt,s outer surface, that is, the surface to be grooved. The spun yarns can be used in either the machine-direction, the cross-machine direction, or in both of these directions.

When the polymeric resin coating is applied to the spun yarn side of the base fabric, the plurality of staple fibers of the spun yarn intermix and penetrate into the coating, thereby establishing a reinforcing effect and permitting the coating to be more firmly bound to the base fabric. After grooves have been cut into the outer surface of the coated base fabric, the plurality of staple fibers, on the surfaces of and extending from the spun yarn, which are embedded in the polymeric resin coating, serve to hold the so-called land areas in place during the operation of the belt on the papermachine. The spun yarns, being interwoven into the base fabric, act as anchors for the matrix of fiber and resin which forms the land areas.

The present invention will now be described, by way of example only, with reference to the accompanying drawings, in which:
Figure 1 is a side elevational view of an extended press nip for which a belt embodying the present invention is designed;
Figure 2 is a partially sectioned front view of the press nip shown in Figure 1;
Figure 3 is a plan view of the belt; and
Figure 4 is a sectional view of the belt taken along lines 4-4 in Figure 3.

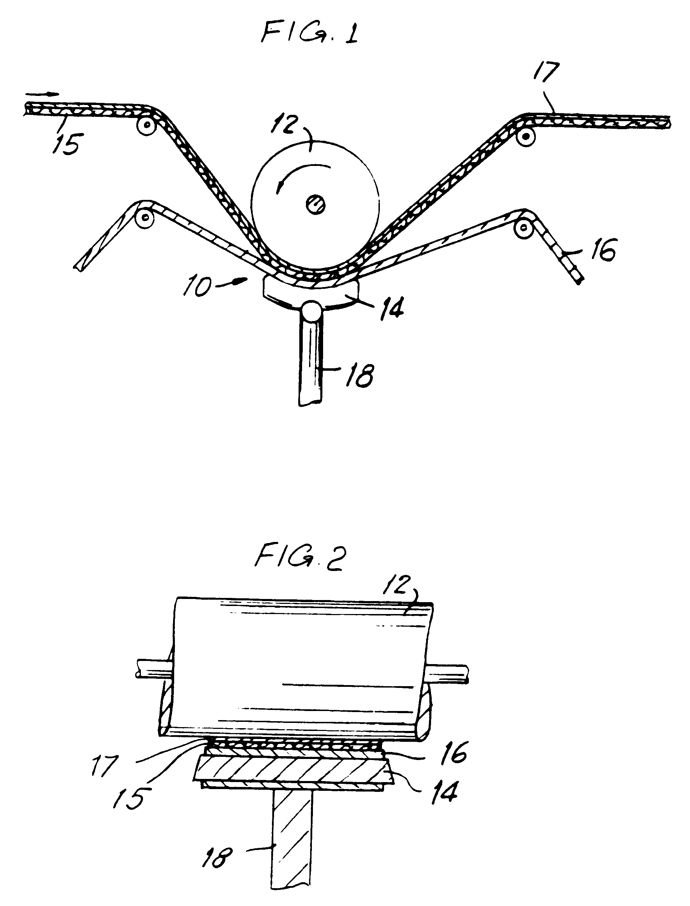

A single-felted extended nip press for dewatering a fibrous web being processed into a paper product on a paper machine is shown in Figures 1 and 2. The press nip 10 is defined by a smooth cylindrical press roller 12, an arcuate pressure shoe 14, and a belt 16 arranged such that it bears against the surface of the cylindrical press roller 12. The arcuate pressure shoe 14 has about the same radius of curvature as the cylindrical press roller 12. The distance between the cylindrical press roller 12 and the arcuate pressure shoe 14 may be adjusted by means of conventional hydraulic or mechanical apparatus, which is not shown, connected to a rod 18 pivotally secured to the arcuate pressure shoe 14. The rod 18 may also be actuated to apply the desired pressure to the arcuate pressure shoe 14. It will be appreciated that the cylindrical press roller 12 and arcuate pressure shoe 14 described above and shown in Figures 1 and 2 are conventional in the art.

Also shown in Figures 1 and 2 are a papermaker's wet press fabric 15 and a fibrous web 17 being processed into a paper sheet. The motions of the belt 16, press fabric 15, fibrous web 17, and cylindrical press roller 12 are as indicated by the arrows in Figure 1.

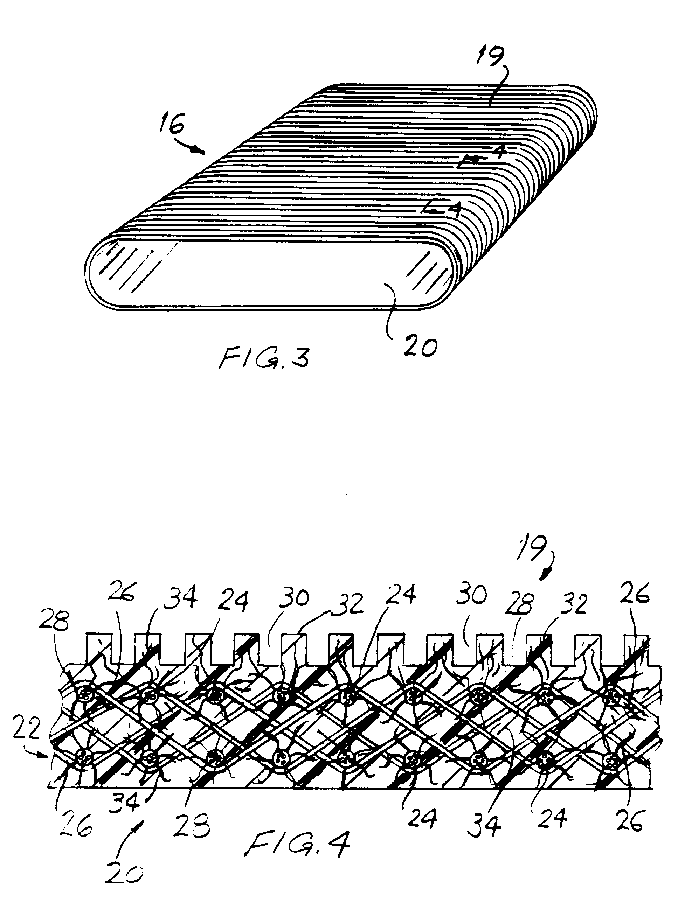

A plan view of the belt 16 is provided in Figure 3. It has an outer surface 19 and an inner surface 20. The belt 16 includes a base fabric which takes the form of an endless loop. The base fabric can be produced, or woven, in endless form, or can be produced in flat form, such as by flat weaving, and joined into endless form by a seam. Seaming into endless form should preferably be done before the inner surface of the belt 16 is coated with polymeric resin.

One embodiment of the belt 16 is shown in greater detail in Figure 4, which is a sectional view taken along line 4-4 in Figure 3. As such, it is a section taken in the cross-machine direction, that is, across the loop of belt 16. The outer surface 19 and the inner surface 20 are as generally indicated. As shown in Figure 4, the belt 16 comprises a multi-layer woven base fabric 22 of machine-direction yarns 24 and cross-machine direction yarns 26 which has been completely impregnated with a polymeric resin coating 28, such as, for example, polyurethane, to render it impervious to liquids, especially lubricating oil.

The base fabric 22 is sufficiently open to allow the polymeric resin to completely impregnate the structure thereof to eliminate the possibility of undesirable voids forming in the belt 16. Voids are particularly undesirable because they would allow the lubricating oil used between the belt 16 and the arcuate pressure shoe 14 to pass through the belt 16 and contaminate the press fabric 15 and fibrous web 17.

Once the coating 28 has been applied and cured, the outer surface 19 and the inner surface 20 of the belt 16 can be ground smooth, giving the belt 16 a uniform thickness. It is especially important for the inner surface 20 to be so finished so that it will be suited for the lubricated sliding contact over the arcuate pressure shoe 14 in the press nip 10.

The outer side 19 of the belt 16 is then provided with a series of grooves 30 which define channels for handling water pressed from the fibrous web 17 in the press nip 10. As shown in Figure 4, the grooves 30 are cut in the machine direction, although they could alternatively be made in the cross-machine, or some other, direction. The grooves 30 are separated by so-called land areas 32, which represent those portions of the outer surface 19 of the belt 16 not disturbed during the grooving process.

In the belt 16, there would preferably be six to eight grooves 30 per inch (per 2.5 cm). The depth of the grooves 30 would fall in the approximate range of from .060 inch to .100 inch (0.15 to 0.25 cm); the width of the grooves 30 would fall in the approximate range of from .020 inch to .030 inch (0.05 to 0.075 cm).

Prior art belts of the present type have failed because the land areas 32 suffer from the tendency to delaminate under the extreme compressive environment of the press nip 10. In colloquial language, the land areas 32 peel off in long strips, thereby destroying the grooved outer surface 19. In the belt 16, this delamination is overcome by using a spun yarn in either the machine-direction, cross-machine direction, or in both of these directions on the outer surface 19 of the base fabric 22.

A spun yarn will have a plurality of staple fibers, which are fairly short and extremely fine. The surface of a strand of spun yarn will typically be characterized by a certain fuzziness brought about by the ends of individual staple fibers extending therefrom. Staple fibers 34 appear in Figure 4 extending through the coating 28 of polymeric resin.

As depicted in Figure 4, the machine-direction yarns 24 are spun yarns giving rise to the staple fibers 34, while the cross-machine direction yarns 26 are monofilament. While the yarns in at least one direction on the outer surface 19 of the base fabric 22 must be spun yarns to provide a belt 16 in accordance with the present invention, spun yarns could be included in other layers of a multi-layer base fabric 22, as shown in Figure 4, without departing from the scope of the present invention.

The staple fibers 34 extend into and become embedded in the coating 28 of polymeric resin. After grooving, the staple fibers 34 serve to hold the land areas 32 in place during the operation of the belt on the papermachine. The spun yarns being interwoven into the structure of the base fabric 22 further act as anchors for the matrix of fiber and resin which form the land areas 32 between the grooves 30.

As noted above, polyurethane is a polymeric resin suitable for use as a coating 28. In general, any fiber variety compatible with a given polymeric resin can be used to produce the spun yarns required for the practice of the present invention.

In general, the belt 16 can be dewatered outside the press nip 10 far more easily than the belt shown in Canadian Patent No. 1,190,779. The mesh on the felt side of the latter tends to trap water; this is not the case with the channels 30 of the present belt 16.

It should be easily understood that modifications to the above would be obvious to anyone skilled in the art without departing from the scope of the appended claims.

## Claims

1. A belt for use in an extended nip press of the shoe type for dewatering a fibrous web, said belt comprising:
a base fabric in the form of an endless loop having an inner surface and an outer surface, said base fabric having machine direction yarns and cross-machine direction yarns, said machine-direction being around said loop and said cross-machine direction being across said loop; and,
a coating of a polymeric resin on said inner and outer surfaces of said base fabric, said coating impregnating and rendering said base fabric impervious to liquids, said coating being smooth and giving said belt a uniform thickness, said coating having a plurality of grooves cut thereinto on said outer surface of said base fabric, said plurality of grooves defining channels for water pressed from said fibrous web alternating with land areas, and,
characterised in that the said yarns in at least one of said machine and cross-machine directions are spun yarns, said spun yarns being spun from a plurality of staple fibres, and in that said land areas are anchored to said base fabric by said plurality of staple fibers of said spun yarns, so that said land areas are substantially less susceptible to delamination from said belt.

2. A belt for use in an extended nip press as claimed in claim 1, wherein said polymeric resin is polyurethane.

3. A belt for use in an extended nip press as claimed in claim 1 or claim 2, wherein said base fabric is a woven fabric, woven from said machine-direction yarns and said cross-machine direction yarns.

4. A belt for use in an extended nip press as claimed in any one of claims 1 to 3, wherein said base fabric is a multilayer fabric and wherein said spun yarns are at least on said outer surface of said base fabric.

5. A belt for use in an extended nip press as claimed in any one of the preceding claims, wherein said plurality of grooves are cut in said machine direction around said outer surface of said belt.

6. A belt for use in an extended nip press as claimed in any one of claims 1 to 4, wherein said plurality of grooves are cut in said cross-machine direction across said outer surface of said belt.

7. A belt for use in an extended nip press as claimed in any one of the preceding claims, wherein there are from six to eight said grooves per inch (2.5 cm) on said outer surface of said belt.

8. A belt for use in an extended nip press as claimed in any one of the preceding claims, wherein said grooves have a depth in the approximate range from .060 inch to .100 inch (0.15 to 0.25 cm).

9. A belt for use in an extended nip press as claimed in any one of the preceding claims, wherein said grooves have a width in the approximate range from .020 inch to .030 inch (0.05 to 0.075 cm).

10. An extended nip press including a belt as claimed in any one of the preceding claims.

## Patentansprüche

1. Ein Gurt zur Verwendung in einer Breitspaltpresse vom Schuhtyp für die Entwässerung einer Faserbahn, welcher Gurt umfaßt:
ein Basisgewebe in Form einer endlosen Schleife mit einer Innenoberfläche und einer Außenoberfläche, welches Basisgewebe Fäden in Maschinenlaufrichtung und Fäden quer zur Maschinenlaufrichtung aufweist, wobei die Maschinenrichtung um die Schleife herum verläuft und die Richtung quer zur Maschine quer zu der Schleife verläuft; und
eine Beschichtung eines Polymerharzes auf der inneren und der äußeren Oberfläche des Basisgewebes, wobei die Beschichtung das Basisgewebe imprägniert und impermeabel macht für Flüssigkeiten, welche Beschichtung glatt ist und dem Gurt eine gleichförmige Dicke verleiht, wobei die Beschichtung eine Mehrzahl von eingeschnittenen Nuten auf der Außenoberfläche des Basisgewebes besitzt, welche Mehrzahl von Nuten Kanäle begrenzt für aus der Faserbahn ausgepreßtes Wasser, alternierend mit flächigen Bereichen, und
dadurch gekennzeichnet, daß die Fäden in mindestens einer der Maschinenlaufrichtung und quer zur Maschinenlaufrichtung gesponnene Fäden sind, welche gesponnenen Fäden aus einer Mehrzahl von Stapelfasern gesponnen sind, und daß die Flächenbereiche an dem Basisgewebe durch die Mehrzahl von Stapelfasern der gesponnenen Fäden verankert wird, so daß die Flächenbereiche wesentlich weniger empfindlich gegenüber Delamination von dem Gurt sind.

2. Ein Gurt zur Verwendung in einer Breitspaltpresse nach Anspruch 1, bei dem das Polymerharz Polyurethan ist.

3. Ein Gurt zur Verwendung in einer Breitspaltpresse nach Anspruch 1 oder Anspruch 2, bei dem das Basisgewebe ein gewebtes Gewebe ist, gewebt aus den Fäden in Maschinenlaufrichtung und den Fäden quer zur Maschinenlaufrichtung.

4. Ein Gurt zur Verwendung in einer Breitspaltpresse nach einem der Ansprüche 1 bis 3, bei dem das Basisgewebe ein Mehrlagengewebe ist und bei dem die gesponnenen Fäden sich mindestens auf der Außenoberfläche des Basisgewebes befinden.

5. Ein Gurt zur Verwendung in einer Breitspaltpresse nach einem der vorangehenden Ansprüche, bei dem die Mehrzahl von Nuten in Maschinenrichtung rings um die Außenoberfläche des Gurtes eingeschnitten sind.

6. Ein Gurt zur Verwendung in einer Breitspaltpresse nach einem der Ansprüche 1 bis 4, bei dem die Mehrzahl von Nuten in Richtung quer zur Maschinenlaufrichtung über die äußere Oberfläche des Gurtes eingeschnitten sind.

7. Ein Gurt zur Verwendung in einer Breitspaltpresse nach einem der vorangehenden Ansprüche, bei dem sechs bis acht solcher Nuten pro Zoll (2,5 cm) auf der Außenoberfläche des Gurtes vorgesehen sind.

8. Ein Gurt zur Verwendung in einer Breitspaltpresse nach einem der vorangehenden Ansprüche, bei dem die Nuten eine Tiefe im annähernden Bereich von 0,060 Zoll bis 0,100 Zoll (0,15 bis 0,25 cm) haben.

9. Ein Gurt zur Verwendung in einer Breitspaltpresse nach einem der vorangehenden Ansprüche, bei dem die Nuten eine Breite im annähernden Bereich von 0,020 Zoll bis 0,030 Zoll (0,05 bis 0,075 cm) aufweisen.

10. Eine Breitspaltpresse mit einem Gurt, wie in einem der vorangehenden Ansprüche beansprucht.

## Revendications

1. Une bande prévue pour être utilisée dans une presse à zone de contact élargie de type à patin, pour déshydrater ou exprimer l'eau d'une feuille continue de fibres, ladite bande comprenant :
un tissu de support en forme de boucle sans fin, comprenant une surface intérieure et une surface extérieure, ledit tissu de support comprenant des fils dans le sens machine et des fils dans le sens travers , ledit sens machine étant autour de ladite boucle et ledit sens travers étant transversal à ladite boucle;
et
un revêtement de résine de polymère sur lesdites surfaces intérieure et extérieure dudit tissu de support, ledit revêtement imprégnant et rendant ledit tissu de support imperméable aux liquides, ledit revêtement étant lisse et communiquant à ladite bande une épaisseur uniforme, ledit revêtement comprenant une pluralité de rainures ménagées à l'intérieur sur ladite surface extérieure dudit tissu de support, ladite pluralité de rainures définissant des canaux pour l'eau exprimée de ladite feuille continue de fibres , en alternance avec des zones en relief et,
caractérisée en ce que lesdits fils, dans au moins l'un desdits sens machine et travers, sont des filés, lesdits filés étant filés à partir d'une pluralité de fibres coupées , et que lesdites zones en relief sont ancrées sur ledit tissu de support par une pluralité de fibres coupées desdits filés, de manière que lesdites zones en relief soient sensiblement moins susceptibles de se décoller de ladite bande.

2. Une bande prévue pour être utilisée dans une presse à zone de contact élargie selon la revendication 1, dans laquelle ladite résine de polymère est du polyuréthane.

3. Une bande prévue pour être utilisée dans une presse à zone de contact élargie selon la revendication 1 ou 2, dans laquelle ledit tissu de support est un tissu, tissé à partir desdits fils dans le sens machine et desdits fils dans le sens travers.

4. Une bande prévue pour être utilisée dans une presse à zone de contact élargie selon l'une quelconque des revendications 1 à 3, dans laquelle ledit tissu de support est un tissu multicouches et lesdits filés sont, au moins, sur ladite surface extérieure dudit tissu de support.

5. Une bande prévue pour être utilisée dans une presse à zone de contact élargie selon l'une quelconque des précédentes revendications, dans laquelle ladite pluralité de rainures est agencée dans ledit sens machine autour de ladite surface extérieure de ladite bande.

6. Une bande prévue pour être utilisée dans une presse à zone de contact élargie selon l'une quelconque des revendications 1 à 4, dans laquelle ladite pluralité de rainures est agencée dans ledit sens travers, transversalement à ladite surface extérieure de ladite bande.

7. Une bande prévue pour être utilisée dans une presse à zone de contact élargie selon l'une quelconque des précédentes revendications, dans laquelle il est prévu de six à huit desdites rainures par 2,5 cm sur ladite surface extérieure de ladite bande.

8. Une bande prévue pour être utilisée dans une presse à zone de contact élargie selon l'une quelconque des précédentes revendications, dans laquelle lesdites rainures ont une profondeur dans la gamme approximative de 0,15 à 0,25 cm.

9. Une bande prévue pour être utilisée dans une presse à zone de contact élargie selon l'une quelconque des précédentes revendications, dans laquelle lesdites rainures ont une largeur dans la gamme approximative de 0,05 à 0,075 cm.

10. Une presse à zone de contact élargie, comprenant une bande selon l'une quelconque des précédentes revendications.
